# EUROPÄISCHE PATENTSCHRIFT

(11) **EP 1 682 782 B1**
(45) Veröffentlichungstag und Bekanntmachung des Hinweises auf die Patenterteilung: **24.05.2017**
(21) Anmeldenummer: 04802697.5
(22) Anmeldetag: 09.11.2004
(51) Int. Cl.: F16B 12/20, A47B 87/00

(54) **VERBINDUNGSVORRICHTUNG**
CONNECTING DEVICE
DISPOSITIF D'ASSEMBLAGE

(30) Priorität: 10.11.2003 DE 20317443 U; 09.02.2004 DE 102004006420
(43) Veröffentlichungstag der Anmeldung: 26.07.2006
(73) Patentinhaber: KONRAD MERKT GMBH, D-78549 Spaichingen (DE)
(72) Erfinder: KLAIBER, Walter, 78595 Hausen ob Verena (DE)
(74) Vertreter: Otten, Roth, Dobler & Partner mbB Patentanwälte
(86) Internationale Anmeldenummer: PCT/DE2004/002480
(87) Internationale Veröffentlichungsnummer: WO 2005/047713

(56) Entgegenhaltungen:
- DE-A1- 1 803 365
- DE-C- 620 019
- GB-A- 1 046 924
- US-A- 4 348 130

## Beschreibung

Die Erfindung betrifft eine Verbindungsvorrichtung nach dem Oberbegriff des Anspruchs 1.

### Stand der Technik

Bei Möbeln, insbesondere bei Tischen, wird häufig die Forderung erhoben, entsprechende Platten variabel zu verbinden. Dies ist vor allem im Konferenztischbereich von besonderer Bedeutung. Hierbei muss häufig ein etwas größerer Konferenztisch in Abhängigkeit der Anzahl der Teilnehmer vorhanden sein. Es sind bereits Tischsysteme im Einsatz, die sich aus mehreren einzelnen Tischen und/oder Verbindungsplatten, Anhängeplatten, etc. zusammensetzen. Zur Verbindung der einzelnen Tischplatten sind z.B. Verbinder handelsüblich, die einerseits mit Hilfe von Werkzeugen wie Schraubendreher, etc. und/oder mit Hilfe eines dritten Teils wie Schrauben oder Sterngriffe verbunden werden. Nachteilig hierbei ist jedoch, dass zum Teil ein Werkzeug benötigt wird, das entsprechend zu bevorraten ist. Andererseits können die Schrauben oder Sterngriffe im Lauf der Zeit verloren gehen, so dass in diesem Fall eine Verbindung der Tischplatten nicht mehr realisierbar ist.

Darüber hinaus sind bereits werkzeuglose Verbinder für Tischplatten gebräuchlich. Bei diesen ist jedoch nachteilig, dass diese für spezielle Tischprogramme festgelegt sind, was deren Einsatzfähigkeit deutlich reduziert.
So offenbart die GB 1,046,924 eine Verbindungsvorrichtung für Möbel, wobei separate, unterschiedlich ausgebildete Komponenten die Verbindung entsprechender Möbel realisiert.
Entsprechendes trifft auch auf die US 4,348,130 A zu, so sind auch hier zwei unterschiedliche Komponenten als Verbinder zum Verbinden von Möbelteilen notwendig.
Die DE 1803365 betrifft ein Schloss für dicke, plattenförmige Elemente, wobei die plattenförmigen Elemente zur Aufnahme eines Schlossteiles vorgesehen sind.

Die DE 620019 C betrifft eine Verbindungsvorrichtung gemäß dem Oberbegriff des Anspruchs 1, wobei ein Riegelelement in einem Führungselement eines Möbelstücks geführt ist und mit einem entsprechenden Gegenstück eines zweiten Möbelstücks eine feste Verbindung generiert. Hierbei umfasst eine exzentrisch gelagerte Scheibe ein Widerlager des Gegenstücks, sodass eine Verklemmung beim Verdrehen der exzentrischen Scheibe realisiert wird.
Nachteilig einer derartigen Verbindungsvorrichtung gemäß dem Stand der Technik ist jedoch, dass die beiden Möbelplatten nicht beliebig miteinander kombiniert werden können, sondern immer eine entsprechende exzentrische Drehscheibe mit einem Widerlager einer gegenüberliegenden Möbelplatte zusammenwirken muss. Bei modernen Möbeln, wobei beispielsweise für Konferenztische oder dergleichen eine möglichst flexible Kombinationsmöglichkeit realisiert werden sollte, ist dies jedoch von Nachteil.

Aufgabe und Vorteile der Erfindung Aufgabe der Erfindung ist es demgegenüber, eine Verbindungsvorrichtung vorzuschlagen, mittels der Möbelplatten ohne Werkzeug und unabhängig von speziellen Tischprogrammen miteinander verbindbar sind.
Diese Aufgabe wird, ausgehend von einer Verbindungsvorrichtung der einleitend genannten Art, durch die Merkmale des Anspruchs 1 gelöst.
Durch die in den Unteransprüchen genannten Maßnahmen sind vorteilhafte Ausführungen und Weiterbildungen der Erfindung möglich.
Dementsprechend zeichnet sich eine erfindungsgemäße Verbindungsvorrichtung dadurch aus, dass das Riegelelement wenigstens teilweise zwischen der ersten Möbelplatte und dem ersten Führungselement angeordnet ist, dass ein zweites Riegelelement wenigstens teilweise zwischen der zweiten Möbelplatte und dem zweiten Führungselement angeordnet ist, wobei die beiden Riegelelemente im Wesentlichen identisch ausgebildet sind, und dass die beiden Führungselemente im Wesentlichen identisch ausgebildet sind, sodass eine im Wesentlichen zwei Möbelplatten und zwei Baueinheiten umfassende Verbindungsvorrichtung realisiert ist, wobei die beiden Baueinheiten im Allgemeinen identisch sind.

Mit Hilfe des gekrümmten Riegelelementes kann ein Hintergreifen der Führungselemente realisiert werden, so dass eine Verrasterung, Verklemmung bzw. Verspannung mittels einer zusätzlichen Einrichtung vermeidbar ist. Hierdurch ist eine besonders einfache Realisierung einer werkzeuglosen Verbindung von Möbeln bzw. Tischplatten umsetzbar.
Gemäß der Erfindung ist das Riegelelement wenigstens teilweise zwischen der Möbelplatte und dem Führungselement angeordnet. Hierdurch kann eine besonders stabile Fixierung realisiert und ein besonders einfach ausgebildetes bzw. geformtes Führungselement hergestellt und/oder an der Möbelplatte montiert werden. Bei der Erfindung ist insbesondere ein Bereich der Unterseite der Möbelplatte als Anschlagsfläche für das Riegelelement ausgebildet. Gemäß der Erfindung sind wenigstens zwei Riegelelemente vorgesehen. Mit dieser Maßnahme wird ermöglicht, dass beispielsweise jedem Führungselement jeweils ein Riegelelement zuordenbar ist.
Gemäß der Erfindung sind die beiden Führungselemente und die beiden Riegelelemente im Wesentlichen identisch ausgebildet. Mit Hilfe dieser Maßnahme wird ein im Wesentlichen zwei Möbelplatten und zwei Baueinheiten umfassende Verbindungsvorrichtung realisiert, wobei die beiden Baueinheiten im Allgemeinen identisch sind. Das führt dazu, dass die Möbelplatten beliebig miteinander verbindbar bzw. koppelbar sind, ohne das darauf zu achten ist, welche Baueinheit einen Stecker und welche Baueinheit eine Aufnahme für den Stecker aufweist. Letzteres ist häufig bei Verbindern für Möbelplatten gemäß dem Stand der Technik notwendig. Dies führt dann dazu, dass eine Baueinheit als sogenannter Vater und eine Baueinheit als sogenannte Mutter ausgebildet ist, die zueinander passend müssen.

Demgegenüber kann gemäß der Erfindung kein entsprechendes "Vater-Mutter-Problem" entstehen, was die Verbindung mit der erfindungsgemäßen Verbindungsvorrichtung entscheidend erleichtert bzw. flexibler handhabbar macht. Vorteilhafterweise weisen die Führungselemente und/oder die Möbelplatte jeweils wenigstens eine quer zur Bewegungsrichtung des Riegelelementes ausgerichtete Anschlagfläche zum Anschlagen des Riegelelementes auf. Mit dieser Maßnahme wird eine mechanische, kraftschlüssige Verbindung der beiden Führungselemente bzw. Tischplatten verwirklicht. Die Anschlagsfläche kann quer gerichtete Druckkräfte und gegebenenfalls flächenparallel Reibungskräfte aufnehmen, was eine besonders stabile, feste Verbindung bzw. Verkettung der Möbel bzw. Tischplatten ermöglicht.
In einer besonderen Weiterbildung der Erfindung weisen die Führungselemente jeweils wenigstens zwei, im Wesentlichen orthogonal zueinander angeordnete Anschlagsflächen auf. Beispielsweise umfassen die Führungselemente und/oder das Riegelelement jeweils wenigstens eine Nut und/oder eine Feder mit der oder den Anschlagsflächen.
Vorteilhafterweise wird durch das Hintergreifen der Führungselemente durch das Riegelelement eine mechanisch feste Verkettung der Möbelplatten realisiert, so dass die Platten in eine erste Raumrichtung miteinander sicher verbunden sind. Vorzugsweise ist die Anschlagsfläche bzw. sind die Anschlagsflächen derart ausgerichtet, dass diese die beiden Möbelplatten auch in die zweite und/oder dritte Raumrichtung miteinander verbinden. Hierdurch werden beispielsweise die Möbelplatten unter anderem auf ein gemeinsames Niveau gezogen.

Das heißt, dass die Platten ohne Höhensprung bzw. Versatz vorteilhaft verkettet werden.

In einer besonderen Variante der Erfindung ist das Riegelelement schwenkbar ausgeführt. Möglicherweise kann das Riegelelement um eine virtuelle oder reelle Drehachse verschwenken. Das heißt, dass als reelle Drehachse z.B. ein Scharnier, Schwenkmechanismus mit einer Drehachse bzw. Drehwelle, etc. oder eine virtuelle Drehachse dadurch generierbar ist, dass aufgrund einer vorteilhaften Führungsbahn eine nichtmaterielle, geometrische Drehachse erzeugt wird, um die sich das Riegelelement dreht.

Vorteilhafterweise ist das Riegelelement weitestgehend parallel bzw. in einer Parallelebene zur Möbelplatte schwenkbar ausgebildet. Mit dieser Maßnahme wird eine vorteilhafte Ausrichtung der Schwenkbewegung erreicht. Weiterhin wird hiermit die Verbindung der Möbelplatten auf einem Niveau erleichtert, da die Führungselemente entsprechend parallel zu den Platten vorteilhaft anzuordnen sind.

Vorzugsweise bildet wenigstens ein Bereich des Querschnittes des Führungselementes einen Kreisabschnitt, Ring- oder Kreissegment oder dergleichen aus. Mit dieser Maßnahme ist eine besonders einfache Führung längs einer gekrümmten Bahn ausbildbar, wobei die Führungsbahn als Kreis bzw. Teilkreis ausgebildet werden kann. Entsprechende Elemente können besonders einfach hergestellt werden. Möglicherweise werden diese Elemente unter Zuhilfenahme von Drehverfahren oder dergleichen hergestellt. Darüber hinaus können entsprechende Elemente durch Gießverfahren hergestellt werden, wobei gegebenenfalls bei der Herstellung der Negativformen Drehverfahren einsetzbar sind.

Generell können als Materialien für die einzelnen Elemente der Verbindungsvorrichtung Kunststoffe, Metalle wie Aluminium, Stahl, Messing, etc., Holz und/oder dergleichen vorgesehen werden. Vorzugsweise werden entsprechende Elemente aus Kunststoff und/oder Metall im Gießverfahren hergestellt. Vorteilhafterweise ist im verbundenen Zustand der Möbelplatten zwischen den beiden Führungselementen ein Spalt bzw. Abstand ausgebildet. Dieser Spalt bewirkt insbesondere, dass eine einzelne, nicht mit einer anderen Möbelplatte verbundene Möbelplatte ein bezüglich der Verbindungskante versetztes Führungselement aufweist, so dass das Führungselement wenigstens teilweise aus dem Sichtbereich verschwindet. Weiterhin kann durch diese Maßnahme die Genauigkeit der Montageposition der Führungselemente bzw. die exakte bündige Ausrichtung der Längskante des Führungselemente bezüglich der Möbelplattenkante reduziert und somit die Montage vereinfacht werden.
Vorteilhafterweise bilden im verbundenen Zustand der Möbelplatten die zwei Riegelelemente im Wesentlichen einen Kreis oder Halbkreis aus, wobei wenigstens ein, vorzugsweise zwei Riegelelemente quer zur Verbindungskante der Möbelplatte ausgerichtet sind. Durch die beiden Riegelelemente, die im Allgemeinen quer zur Verbindungskante der Möbelplatten ausgerichtet sind, wird eine besonders stabile bzw. belastbare Verbindung der beiden Möbelplatten realisiert.

Grundsätzlich kann die Verbidung längs einer Seite und/oder im Eckbereich einer Möbelplatte angeordnet werden. Wird die verbindung am Eck angeordnet, überstreicht das entsprechende Führungselement vorzugsweise einen Winkelbereich von etwa 90° bzw. ein Viertel eines Kreises. Bei der seitlichen Anordnung der Verbindung überstreicht das Führungselement vorzugsweise einen Winkelbereich von etwa 180° bzw. einen Halbkreis. Vorzugsweise ist wenigstens eine Rasteinheit zum Verrasten des Riegelelementes mit dem Führungselement vorgesehen. Mit Hilfe einer Rasteinheit können eine oder mehrere definiert vorgegebene Rastpositionen des Riegelelementes eingestellt werden. Diese Rastpositionen können für vorteilhafte Funktionen bzw. Möglichkeiten der Handhabung bzw. Verwendung der Verbindungsvorrichtung gemäß der Erfindung eingesetzt werden. Beispielsweise kann eine definierte geschlossene und/oder offene Position mittels der Rasterung festgelegt werden. Generell verhindert das Verrasten des Riegelelementes dessen unbeabsichtigtes Verstellen, so dass sowohl ein ungewolltes Hervorstehen als auch ein unbeabsichtigtes Hineingleiten des Riegelelementes in das Führungselement wirkungsvoll verhindert wird. Beispielsweise umfasst die Rasteinheit ein Feder-Dämpfungselement wie z.B. eine Spiral-, Blatt- und/oder Kunststoff- bzw. Metallfeder, mit Hilfe dessen und einer vorteilhaften Ausnehmung eine Verrasterung realisiert wird.

In einer besonderen Weiterbildung der Erfindung umfasst die Rasteinheit wenigstens eine Rastposition, bei der das Riegelelement einen über die Möbelplatte hinausstehenden Überstand aufweist. Vorzugsweise ist der Überstand über den Rand der Möbelplatte hinaus kleiner als der Abstand des gegenüberliegenden Führungselementes zur Kante dessen Möbelplatte. Das heißt insbesondere, dass der Überstand kleiner als der halbe Spalt zwischen den beiden zusammenwirkenden Führungselementen ausgebildet ist. Dies führt dazu, dass das Riegelelement zwar über die entsprechende Möbelplatte hinaus steht, aber nicht mit dem anderen bzw. zweiten Führungselement verbindbar ist.

Zum Beispiel kann auf den Überstand des entsprechend positionierten Riegelelementes des ersten Führungselementes in einem ersten Arbeitsschritt eine Möbelplatte mit einem zweiten Führungselement aufgelegt bzw. abgelegt werden. In einem daran anschließenden zweiten Arbeitsschritt kann das Riegelelement des ersten Führungselementes mit dem zweiten Führungselement in vorteilhafter Weise verbunden werden. Hierdurch ist es realisierbar, dass eine einzige Person beispielsweise zwischen zwei Tischen mit je einer einen erfindungsgemäßen Verbinder aufweisenden Möbelplatte ohne Tischfuß einfügt bzw. montiert. Das bedeutet, dass eine sogenannte Einmannbedienung unter anderem für ein umfangreiches bzw. variables Konferenztischsystem oder dergleichen möglich ist. Dies ist eine entscheidende Erleichterung beim Zusammenstellen bzw. der Montage/Demontage eines Tischsystems wie z.B. bei Konferenztischsystemen, etc..

Vorteilhafterweise ist wenigstens eine Blockiereinheit zum Blockieren der Verstellung des Riegelelementes gegenüber dem Führungselement vorgesehen. Mit Hilfe dieser Blockiereinheit kann ein Verstellen des Riegelelementes vollständig unterbunden werden. Beispielsweise kann ein unbeabsichtigtes und/oder ein Verstellen über einen vorgegebenen Punkt hinaus wirkungsvoll unterbunden werden. Vorzugsweise umfasst die Blockiereinheit einen Endanschlag zum Festlegen einer Endposition des Riegelelementes, z.B. eine vollständig Offen-und/oder Geschlossen-Stellung. Möglicherweise umfasst die Blockiereinheit eine Verzahnung, etc. zum Blockieren des Riegelelementes in mehreren Positionen. Mit diesen Varianten der Erfindung ist in vorteilhafter Weise ein insbesondere unbeabsichtigtes Verlieren bzw. Loslösen des Riegelelementes wirkungsvoll verhindert. Hierdurch wird eine selbsttätige Demontage des Riegelelementes unterbunden.

In einer vorteilhaften Ausführungsform der Erfindung weist die Blockiereinheit eine Blockierungsnut und eine Anschlagsanformung bzw. einen Anschlagstift oder dergleichen auf, wobei am Riegelelement ein Teil der Blockiereinheit und am Führungselement das andere Teil angeordnet ist. Der Anschlagsstift ist hierbei vorzugsweise längs der Blockierungsnut verstellbar und schlägt wenigstens an einem, vorzugsweise an den zwei Enden der Blockierungsnut, an entsprechende Blockierungsanschläge an. Hierdurch ist eine Blockade des Riegelelementes besonders einfach umgesetzt.

Vorteilhafterweise ist wenigstens eine Halteeinheit zum Zusammenhalten des Riegelelementes mit dem Führungselement vorgesehen. Die Blockiereinheit kann die Halteeinheit umfassen. Andererseits kann eine separate Halteeinheit vorgesehen werden. Beispielsweise verhindert die Blockiereinheit das Verstellen bzw. Lösen des Riegelelementes vom Führungselement in eine Raumrichtung, vorzugsweise in Richtung des Verstellweges und die Halteeinheit verhindert das Verstellen bzw. Lösen des Riegelelementes vom Führungselement in eine oder zwei andere, insbesondere orthogonal zur zuvor genannten ausgerichteten Raumrichtungen. Hierdurch wird ein Lösen des Riegelelementes von Führungselement, der Möbelplatte bzw. vom Möbel während des Betriebes bzw. der Verwendung vollständig verhindert.

Vorzugsweise ist die Rasteinheit als die Halteeinheit ausgebildet. Durch diese multifunktionelle Ausbildung der Einheit reduziert sich die Anzahl der verwendeten Teile, so dass eine konstruktiv und wirtschaftlich günstige Umsetzung der Erfindung realisiert wird. Beispielsweise umfast die Rasteinheit eine Kunststoff-Blattfeder, die derart ausgebildet ist, dass diese zugleich das Riegelelement in die quer zur Verstellrichtung ausgerichteten Richtungen hält.

Vorteilhafterweise weist das Riegelelement wenigstens eine Anformung bzw. Nase und/oder Ausnehmung bzw. Vertiefung zum Verstellen des Riegelelementes auf. Durch die hierdurch erreichte verbesserte Handhabung wird ein vergleichsweise leichtes Verstellen des Riegelelementes ermöglicht.

Generell kann gemäß der Erfindung die Verbindungsvorrichtung bzw. der Verbinder an beliebige Möbelplatten bzw. Möbelsysteme angebracht und/oder nachgerüstet werden.

Vorzugsweise ist ein Führungs- - und ein Riegelelement als Beschlag für Möbel bzw. Möbelplatten ausgebildet. Hiermit können beliebige Möbel bzw. Möbelplatten, insbesondere Tischplatten oder dergleichen mit entsprechend vorteilhaften Beschlägen aus- und/oder nachgerüstet werden. Eine wesentliche Veränderung der Möbelplatten ist hierbei nicht notwendig. Beispielsweise werden die Führungselemente mit Hilfe von Fixierelementen wie z.B. Schrauben, Nieten, Stiften, Nägeln oder dergleichen, und/oder mittels einer Klebung an Möbelplatten fixiert. Dies bedeutet, dass an Möbelplatten separate Baueinheiten mit wenigstens einem Führungs- und einem Riegelelement angebracht bzw. befestigt werden.

Gegebenfalls sind z.B. lediglich vorteilhafte Bohrungen an den Möbelplatten vorzusehen, um die Fixierung mittels Schrauben zu verbessern. Aufwendige Ausnehmungen der Möbelplatten wie Nuten, Fräsungen oder dergleichen müssen nicht vorgesehen werden. Hiermit vereinfacht sich die Umsetzung und zugleich wird die Stabilität der Verkettung erhöht. Entsprechende Möbelplatten sind häufig aus Spanplatten oder dergleichen hergestellt, die beim Führen des Riegelelementes und unter Belastung vergleichsweise leicht beeinträchtigt werden bzw. verschleißen können.

Grundsätzlich wird mit separat an der Möbelplatte anbringbaren Führungs- und/oder Riegelelementen, z.B. aus Metall und/oder Kunststoff, die Stabilität und der Verschleiß deutlich verbessert und somit die Lebensdauer entscheidend verlängert.

### Ausführungsbeispiel

Ein Ausführungsbeispiel der Erfindung ist in der Zeichnung dargestellt und wird anhand der Figuren nachfolgend näher erläutert.

Im Einzelnen zeigt:
Figur 1 eine schematische Ansicht zweier miteinander verbundener Tischplatten gemäß einer erfindungsgemäßen Verbindungsvorrichtung,
Figur 2 einen schematischen Schnitt durch die Anordnung gemäß Figur 1,
Figur 3 einen weiteren, schematischen Schnitt durch die Anordnung gemäß Figur 1
Figur 4 eine schematische Ansicht mit Schnittdarstellungen eines Führungselementes einer zweiten erfindungsgemäßen Verbindungsvorrichtung,
Figur 5 eine schematische Ansicht mit Schnittdarstellungen eines Riegelelementes der zweiten erfindungsgemäßen Verbindungsvorrichtung,
Figur 6 schematische Ansichten eines Führungs- und Riegelelementes einer dritten erfindungsgemäßen Verbindungsvorrichtung,
Figur 7 schematische Ansichten eines Führungselementes der dritten erfindungsgemäßen Verbindungsvorrichtung,
Figur 8 schematische Ansichten eines Riegelelementes der dritten erfindungsgemäßen Verbindungsvorrichtung und
Figur 9 eine schematische, perspektivische Ansicht einer Rastsicherung der dritten erfindungsgemäßen Verbindungsvorrichtung.

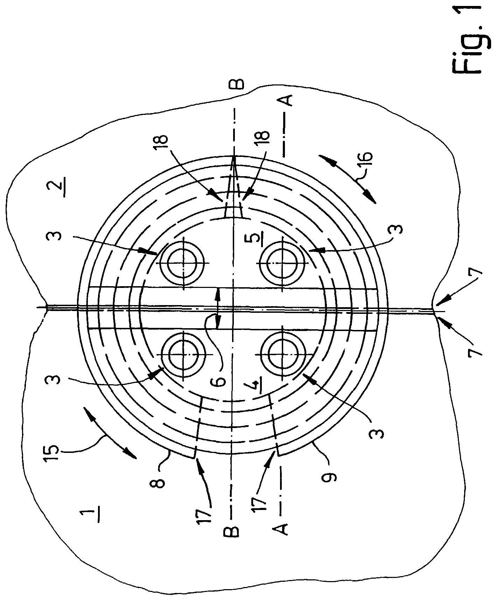

In Figur 1 ist ein Ausschnitt einer Verbindungsvorrichtung gemäß der Erfindung dargestellt. Führungselemente 4, 5 sind an einer Möbelplatte 1 und einer Möbelplatte 2 fixiert. Zur Fixierung weisen die Führungselemente 4, 5 gemäß der Ausführungsvariante hierfür Ausnehmungen 3 auf, in die beispielsweise jeweils eine Schraube oder dergleichen einbringbar bzw. versenkbar ist. Aus Gründen der Übersichtlichkeit wurde auf die Darstellung entsprechender Schrauben, etc. verzichtet. Die Verbindungsvorrichtung umfasst insbesondere zwei Führungselemente 4 und 5, die jeweils zwei Ausnehmungen 3 zur Fixierung an der entsprechenden Platte 1 bzw. 2 aufweisen. Die beiden Führungselemente 4, 5 sind im verriegelten Zustand gemäß Figur 1 durch einen Spalt 6 voneinander beabstandet. Hierbei ist jedes Führungselement 4 bzw. 5 von einer Verbindungskante 7 nahezu gleichweit beabstandet. Denkbar ist zur Montage der Führungselemente 4, 5 an der Platte 1, 2 eine Lehre zu verwenden, die an der Tischkante angelegt wird und eine Abstufung aufweist, an die wiederum das Führungselement 4, 5 anzulegen ist. Durch die Abstufung der Lehre wird somit der Abstand zur Kante bzw. die halbe Spaltbreite festgelegt.
Die Führungselemente 4 bzw. 5 sind jeweils als Kreisabschnitt ausgebildet, wobei die beiden Führungselemente 4 und 5 zusammen mit dem Spalt 6 eine weitestgehend kreisrunde Anordnung generieren. Das heißt, diese 4, 5 überstreichen jeweils einen Winkelbereich von etwa 180°. Bei einem nicht näher dargestellten Eckverbinder wären es dagegen etwa 90°. Zur Verbindung zwischen den beiden Führungselementen 4, 5 sind zwei Riegel 8 und 9 vorgesehen, die im Wesentlichen quer zu den Tischkanten 7 in verriegelter Position angeordnet sind. Hierdurch hintergreifen die beide Riegel 8 bzw. 9 die beiden Führungselemente 4 bzw. 5 derart, dass die beiden Tischplatten 1 und 2 quer zu den Tischkanten 7 fest miteinander verkettet sind.

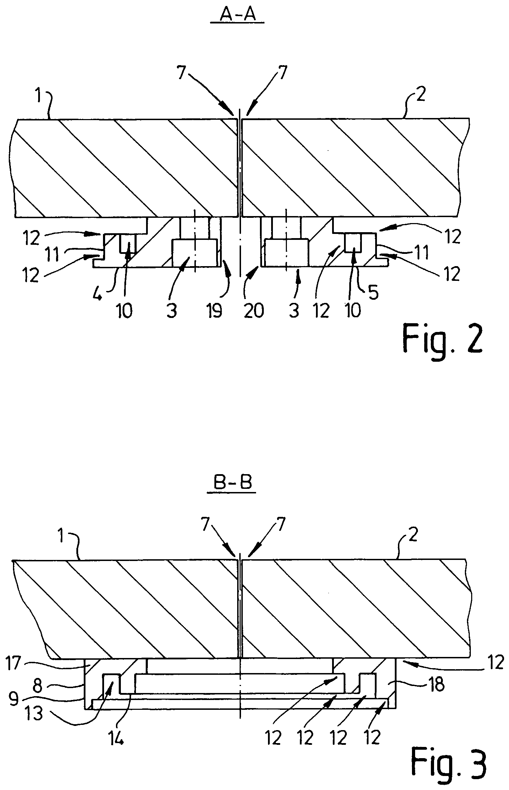

Figur 2 stellt einen Schnitt der Anordnung gemäß Figur 1 dar, wobei die Anordnung längs der Linie A-A geschnitten wurde. Aus Gründen der Übersichtlichkeit wurde auf die Darstellung der Riegel 8 bzw. 9 in Figur 2 verzichtet. In Figur 2 wird deutlich, dass die Führungselemente 4 bzw. 5 jeweils mindestens eine Nut 10 bzw. Feder 11 aufweisen, in denen die Riegel 8 bzw. 9 geführt werden.

Zugleich wird deutlich, dass die Riegel 8 bzw. 9 zwischen dem Führungselement 4 bzw. 5 sowie der entsprechenden Tischplatte 1 bzw. 2 anzuordnen sind. Durch diese Maßnahmen bilden sowohl die Tischplatten 1, 2 sowie die Führungselemente 4, 5 Anschlagsflächen 12 aus, längs derer die Riegel 8 bzw. 9 geführt und quer zu diesen fixiert werden. Durch diese zum Teil orthogonal zueinander angeordneten Anschläge 12 und durch das Hintergreifen der Führungselemente 4 bzw. 5 durch die Riegel 8 bzw. 9, wird eine mechanisch stabile Verkettung der Tischplatten 1 bzw. 2 in alle drei Raumrichtungen verwirklicht.

In Figur 3 ist ein Schnitt längs der Linie B-B gemäß Figur 1 dargestellt, wobei auf die Abbildung der Führungselemente 4 bzw. 5 aus Gründen der Übersichtlichkeit verzichtet wurde. Die Riegel 8 bzw. 9 weisen jeweils eine Nut 13 bzw. Feder 14 auf, die in die Nuten 10 bzw. Federn 11 der Führungselemente 4 bzw. 5 passen, so dass eine vorteilhafte Führung längs den Führungsrichtungen 15 bzw. 16 verwirklicht wird.

Weiterhin verdeutlicht die Darstellung gemäß Figur 1, dass sich die Riegel 8 bzw. 9 über ein Winkelsegment erstrecken, dass dem Winkelsegment der Führungselemente 4 bzw. 5 entspricht. Hierdurch wird erreicht, dass bei einem Verstellen der Riegel 8, 9 längs der Führungsrichtungen 15, 16 in eine entriegelte Position sich Stirnflächen 17 bzw. 18 der Riegel 8, 9 weitestgehend fluchtend bzw. bündig mit Kanten 19 bzw. 20 der Führungselemente 4, 5 ausrichten können. Es wird eine vollständige Entkopplung bzw. Entriegelung der beiden Möbelplatten 1 bzw. 2 erreicht.

Es ist denkbar, dass die Riegel 8, 9 ohne in den Figuren 1 bis 3 näher dargestellte, in radialer Richtung hervorstehende Nasen bzw. Anformungen aufweisen, mit Hilfe derer ein Verstellen längs der Führungsrichtung 15 bzw. 16 erreicht wird. Die im Ausführungsbeispiel dargelegte Verbindungsvorrichtung weist jeweils zwei weitestgehend identische Führungselemente 4, 5 sowie Riegel 8, 9 auf, so dass in gelöster Stellung zwei baugleiche Einheiten entstehen. Hierdurch kann im Unterschied zum Stand der Technik kein sogenanntes "Vater-Mutter-Problem" vorkommen. Das heißt, dass beim Verketten zweier Tischplatten nicht darauf geachtet werden muss, welches Verbinderteil an welcher Tischplatte vorhanden ist.

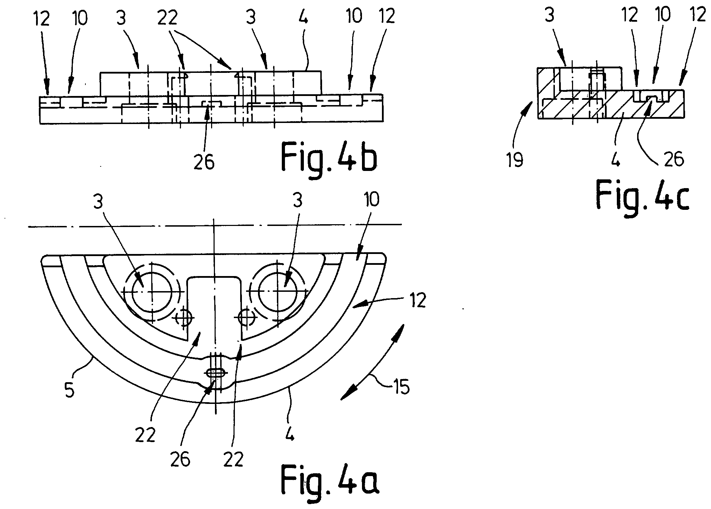

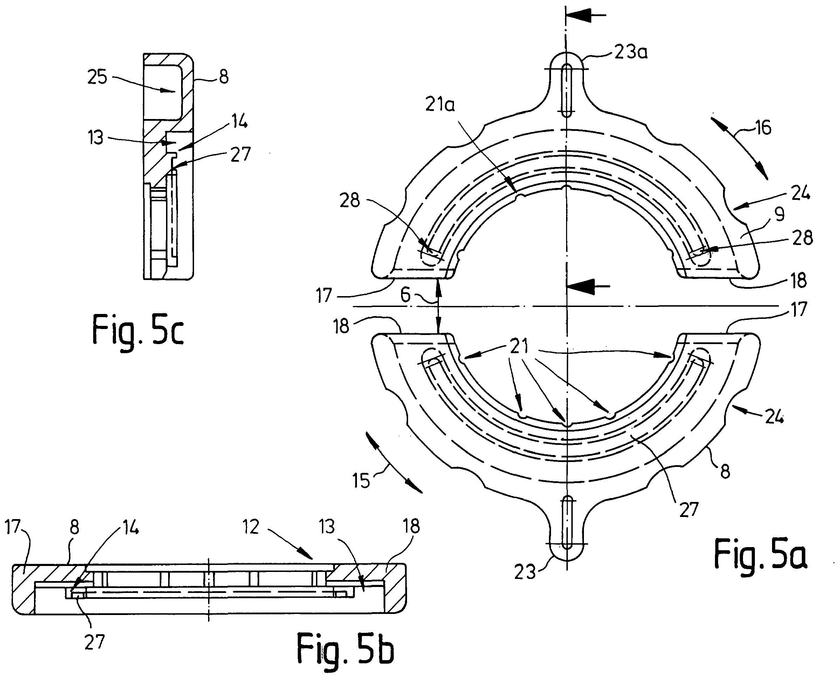

In den Figuren 4 und 5 sind zweite Ausführungsformen von Führungselementen 4, 5 und Riegelelementen 8, 9 dargestellt. Hierbei bezeichnen gleiche Bezugszeichen mit in den Figuren 1 bis 3 dargestellten vergleichbare Teile. In den Figuren 4 und 5 sind aus Gründen der Übersichtlichkeit die Möbelplatten 1, 2 nicht dargestellt.

Im Unterschied zu den Varianten gemäß den Figuren 1 bis 3 weisen die Varianten der Figuren 4 und 5 insbesondere eine Rasterung 21 auf, in die eine nicht näher dargestellte Rastnase eingreift. Die Rastnase wird mittels einer Blattfeder in die Rasterung gedrückt. Die gesamte Einheit aus Rastnase und Blattfeder ist zum Beispiel aus Kunststoff gefertigt. Zugleich kann die gesamte Einheit derart ausgebildet werden, dass diese unter anderem mittels Fixierungen 22 und mit einer nicht dargestellten Auskragung den Riegel 8, 9 mit dem Führungselement 4, 5 quer zur Verstellrichtung 15, 16 zusammenhält.

Mit den Rastern 21a wird eine Zwischenstellung des Riegels 4, 5 realisiert, wobei dieser in nicht näher dargestellter Weise etwas über die Platte 1, 2 übersteht, so dass eine einzelne Platte 1, 2 auf dem Überstand abgelegt werden kann.

Eine Nase 23 und Vertiefungen 24 der Riegel 8, 9 erleichtern ein Verstellen bzw. Arretieren und/oder Lösen der Verriegelung. In der dargestellten Variante weist die Nase 23 eine optional vorzusehende Ausnehmung 25 auf.

Zum Blockieren der Riegel 8, 9 mit dem jeweiligen Führungselement weisen diese eine als Hohlnut 27 der Feder 14 und ein Anschlagstift 26 auf. Der Anschlagstift 26 ist bei dieser Variante als Anformung des Führungselementes 4, 5 im Grund der Nut 10 ausgebildet. Der Anschlagstift 26 steht in der Endposition am Ende 28 der Hohlnut 27 an, so dass eine sichere Festlegung der Endposition gewährleistet und somit ein unbeabsichtigtes Verlieren des Riegels 4, 5 wirkungsvoll verhindert wird.

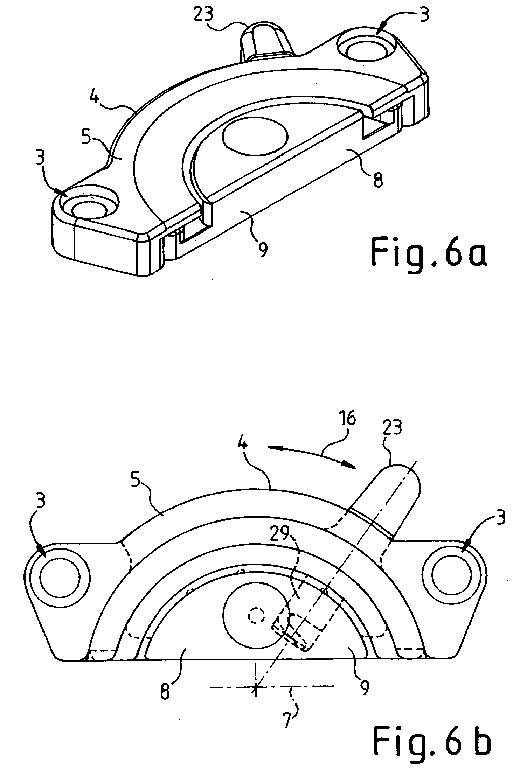

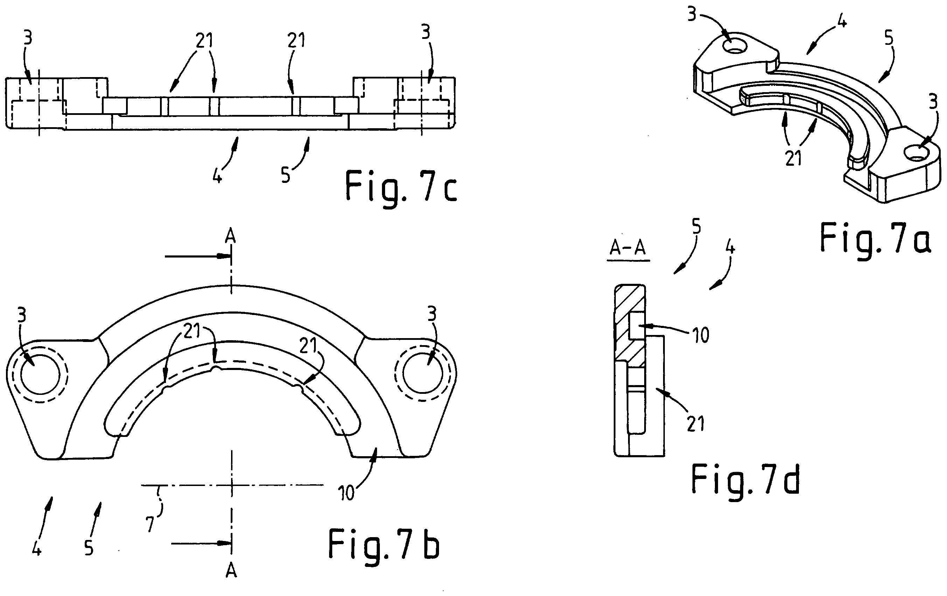

In den Figuren 6 bis 9 sind dritte Ausführungsformen von Führungselementen 4, 5 und Riegelelementen 8, 9 dargestellt. Hierbei bezeichnen gleiche Bezugszeichen mit in den Figuren 1 bis 5 dargestellten vergleichbare Teile. In den Figuren 6 bis 9 sind aus Gründen der Übersichtlichkeit die Möbelplatten 1, 2 nicht dargestellt.

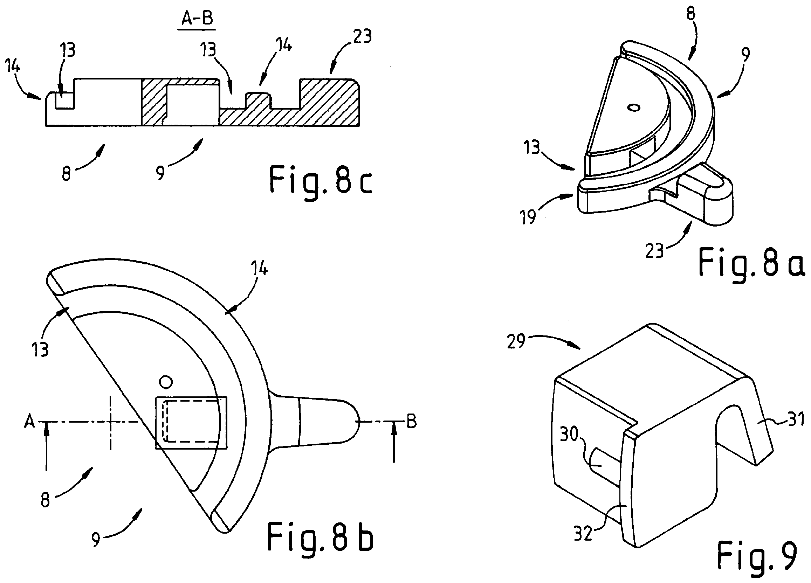

Im Unterschied zu den Varianten gemäß den Figuren 1 bis 5 weisen die Varianten der Figuren 6 bis 9 insbesondere im äußeren Bereich der Führungselemente 4, 5 liegende Ausnehmungen 3 bzw. Bohrungen 3 auf, mit denen die Führungselemente 4, 5 an einer planaren Möbelplatte fixiert werden können. Zum Beispiel kann mittels der Bohrungen 3 eine Schraube oder dergleichen zum Anschrauben des Führungselementes an der Möbelplatte vorgesehen werden. Der vergleichsweise große Abstand der Ausnehmungen 3 verbessert die Fixierung des Führungselementes an der Möbelplatte. Weiterhin ist bei dieser Variante der Erfindung das Führungselement 4, 5 umfangseitig und das Riegelelement 8, 9 innenseitig bzw. mittig angeordnet. Figur 6 zeigt die montierten Führungs- und Riegelelemente in perspektivischer Sicht als auch in Draufsicht. In der Draufsicht gemäß Figur 6b ist zudem eine Sicherung 29 aufgeführt. Diese ist in Figur 9 perspektivisch dargestellt, wobei insbesondere eine Rasnase 30 zum Verrasten mit der Rasterung 21 des Führungselementes 4, 5 bzw. entsprechender Ausnehmungen dargestellt ist.

Die Rastnase 30 der Sicherung 29 wird mittels einer Blattfeder 31 gegen die Rasterung 21 des Führungselementes 4, 5 gedrückt. Vorzugsweise ist die Sicherung aus Kunststoff und/oder federelastischem Metall. Weiterhin umfasst die Sicherung 29 eine Haltenase 32 zum Zusammenhalten der Riegel 8, 9 mit dem jeweiligen Führungselement 4, 5 im nicht an der Möbelplatte 1, 2 fixierten Zustand. Im an der Platte 1, 2 fixierten Zustand ist die Haltenase 32 im Wesentlichen ohne Funktion. Die Haltenase 32 erleichtert somit die Lagerung, den Transport sowie die Montage.

### Bezugszeichenliste

- 1: Platte
- 2: Platte
- 3: Ausnehmung
- 4: Führungselement
- 5: Führungselement
- 6: Spalt
- 7: Kante
- 8: Riegel
- 9: Riegel
- 10: Nut
- 11: Feder
- 12: Anschlag
- 13: Nut
- 14: Feder
- 15: Führungsrichtung
- 16: Führungsrichtung
- 17: Stirnfläche
- 18: Stirnfläche
- 19: Kante
- 20: Kante
- 21: Rasterung
- 22: Fixierung
- 23: Nase
- 24: Vertiefung
- 25: Ausnehmung
- 26: Anschlagstift
- 27: Hohlnut
- 28: Ende
- 29: Sicherung
- 30: Rastnase
- 31: Blattfeder
- 32: Haltenase

## Patentansprüche

1. Verbindungsvorrichtung mit einem Riegelelement (8), einem an einer ersten Möbelplatte (1) angeordneten, ersten Führungselement (4) zum Führen des Riegelelementes (8), wobei das Riegelelement (8) als gekrümmtes Riegelelement (8, 9) ausgebildet ist, wobei das erste Führungselement (4) wenigstens einen gekrümmten, ersten Führungsbereich zum Führen des Riegelelementes (8) aufweist, und einem an einer zweiten Möbelplatte (2) angeordneten, zweiten Führungselement (5) mit einem gekrümmten, zweiten Führungsbereich zum Führen des Riegelelementes (8), **dadurch gekennzeichnet, dass** das Riegelelement (8) wenigstens teilweise zwischen der ersten Möbelplatte (1) und dem ersten Führungselement (4) angeordnet ist, dass ein zweites Riegelelement (9) wenigstens teilweise zwischen der zweiten Möbelplatte (2) und dem zweiten Führungselement (5) angeordnet ist, wobei die beiden Riegelelemente (8, 9) im Wesentlichen identisch ausgebildet sind, und dass die beiden Führungselemente (4, 5) im Wesentlichen identisch ausgebildet sind, sodass eine im Wesentlichen zwei Möbelplatten und zwei Baueinheiten umfassende Verbindungsvorrichtung realisiert ist, wobei die beiden Baueinheiten im Allgemeinen identisch sind.

2. Verbindungsvorrichtung nach Anspruch 1, **dadurch gekennzeichnet, dass** die Führungselemente (4, 5) und/oder die Möbelplatte (1, 2) jeweils wenigstens eine quer zur Bewegungsrichtung (15, 16) des Riegelelementes (8, 9) ausgerichtete Anschlagfläche (12) zum Anschlagen des Riegelelementes (8, 9) aufweisen.

3. Verbindungsvorrichtung nach einem der vorgenannten Ansprüche, **dadurch gekennzeichnet, dass** die Führungselemente (4, 5) jeweils wenigstens zwei, im Wesentlichen orthogonal zueinander angeordnete Anschlagflächen (12) aufweisen.

4. Verbindungsvorrichtung nach einem der vorgenannten Ansprüche, **dadurch gekennzeichnet, dass** die Führungselemente (4, 5) und/oder das Riegelelement (8, 9) jeweils wenigstens eine Nut (10, 13) und/oder eine Feder (11, 14) mit der Anschlagfläche (12) aufweisen.

5. Verbindungsvorrichtung nach einem der vorgenannten Ansprüche, **dadurch gekennzeichnet, dass** das Riegelelement (8, 9) schwenkbar geführt ist.

6. Verbindungsvorrichtung nach einem der vorgenannten Ansprüche, **dadurch gekennzeichnet, dass** das Riegelelement (8, 9) weitestgehend parallel zur Möbelplatte schwenkbar geführt ist.

7. Verbindungsvorrichtung nach einem der vorgenannten Ansprüche, **dadurch gekennzeichnet, dass** wenigstens ein Bereich des Querschnittes des Führungselementes (4, 5) einen Kreisabschnitt ausbildet.

8. Verbindungsvorrichtung nach einem der vorgenannten Ansprüche, **dadurch gekennzeichnet, dass** im verbundenen Zustand der Möbelplatten (1, 2) zwischen den beiden Führungselementen (4, 5) ein Spalt (6) ausgebildet ist.

9. Verbindungsvorrichtung nach einem der vorgenannten Ansprüche, **dadurch gekennzeichnet, dass** im verbundenen Zustand der Möbelplatten (1, 2) die zwei Riegelelemente (8, 9) im Wesentlichen einen Kreis ausbilden.

10. Verbindungsvorrichtung nach einem der vorgenannten Ansprüche, **dadurch gekennzeichnet, dass** wenigstens eine Rasteinheit zum Verrasten des Riegelelementes (8, 9) mit dem Führungselement (4, 5) vorgesehen ist.

11. Verbindungsvorrichtung nach einem der vorgenannten Ansprüche, **dadurch gekennzeichnet, dass** die Rasteinheit wenigstens eine Rastposition umfasst, bei der das Riegelelement (8, 9) einen über die Möbelplatte (1, 2) hinausstehenden Überstand aufweist.

12. Verbindungsvorrichtung nach einem der vorgenannten Ansprüche, **dadurch gekennzeichnet, dass** wenigstens eine Blockiereinheit zum Blockieren der Verstellung des Riegelelementes (8, 9) gegenüber dem Führungselement (4, 5) vorgesehen ist.

13. Verbindungsvorrichtung nach einem der vorgenannten Ansprüche, **dadurch gekennzeichnet, dass** wenigstens eine Halteeinheit zum Zusammenhalten des Riegelelementes (8, 9) mit dem Führungselement (4, 5) vorgesehen ist.

14. Verbindungsvorrichtung nach einem der vorgenannten Ansprüche, **dadurch gekennzeichnet, dass** die Rasteinheit als die Halteeinheit ausgebildet ist.

15. Möbel mit wenigstens einer an mindestens einer Möbelplatte (1, 2) angeordneten Verbindungsvorrichtung zum Verbinden von Möbelplatten (1, 2), **dadurch gekennzeichnet, dass** die Verbindungsvorrichtung nach einem der vorgenannten Ansprüche ausgebildet ist.

## Claims

1. Connecting device having a locking element (8), having a first guide element (4), which is arranged on a first furniture panel (1) and is intended for guiding the locking element (8), wherein the locking element (8) is designed in the form of a curved locking element (8, 9), wherein the first guide element (4) has at least one curved, first guide region for guiding the locking element (8), and having a second guide element (5), which is arranged on a second furniture panel (2) and has a curved, second guide region for guiding the locking element (8), **characterized in that** the locking element (8) is arranged, at least in part, between the first furniture panel (1) and the first guide element (4), **in that** a second locking element (9) is arranged, at least in part, between the second furniture panel (2) and the second guide element (5), wherein the two locking elements (8, 9) are of essentially identical design, and **in that** the two guide elements (4, 5) are of essentially identical design, a connecting device comprising essentially two furniture panels and two structural units therefore being realized, wherein the two structural units are generally identical.

2. Connecting device according to Claim 1, **characterized in that** the guide elements (4, 5) and/or the furniture panel (1, 2) each have at least one stop surface (12), which is oriented transversely to the movement direction (15, 16) of the locking element (8, 9) and against which the locking element (8, 9) stops.

3. Connecting device according to either of the preceding claims, **characterized in that** the guide elements (4, 5) each have at least two stop surfaces (12) arranged essentially orthogonally in relation to one another.

4. Connecting device according to one of the preceding claims, **characterized in that** the guide elements (4, 5) and/or the locking element (8, 9) each have at least one groove (10, 13) and/or a tongue (11, 14) with the stop surface (12).

5. Connecting device according to one of the preceding claims, **characterized in that** the locking element (8, 9) is guided in a pivotable manner.

6. Connecting device according to one of the preceding claims, **characterized in that** the locking element (8, 9) is guided in a pivotable manner for the most part parallel to the furniture panel.

7. Connecting device according to one of the preceding claims, **characterized in that** at least one region of the cross section of the guide element (4, 5) forms part of the circle.

8. Connecting device according to one of the preceding claims, **characterized in that**, when the furniture panels (1, 2) are in the connected state, a gap (6) is formed between the two guide elements (4, 5).

9. Connecting device according to one of the preceding claims, **characterized in that**, when the furniture panels (1, 2) are in the connected state, the two locking elements (8, 9) essentially form a circle.

10. Connecting device according to one of the preceding claims, **characterized in that** at least one latching unit is provided for latching the locking element (8, 9) to the guide element (4, 5).

11. Connecting device according to one of the preceding claims, **characterized in that** the latching unit comprises at least one latching position in which the locking element (8, 9) has a projection which protrudes beyond the furniture panel (1, 2).

12. Connecting device according to one of the preceding claims, **characterized in that** at least one blocking unit is provided for blocking the adjustment of the locking element (8, 9) in relation to the guide element (4, 5).

13. Connecting device according to one of the preceding claims, **characterized in that** at least one retaining unit is provided for holding the locking element (8, 9) and the guide element (4, 5) together.

14. Connecting device according to one of the preceding claims, **characterized in that** the latching unit is designed in the form of the retaining unit.

15. Piece of furniture having at least one connecting device which is intended for connecting furniture panels (1, 2) and is arranged on at least one furniture panel (1, 2), **characterized in that** the connecting device is designed according to one of the preceding claims.

## Revendications

1. Dispositif d'assemblage avec un élément de verrouillage (8), un premier élément de guidage (4) disposé au niveau d'une première plaque de meuble (1) pour guider l'élément de verrouillage (8), l'élément de verrouillage (8) étant réalisé sous la forme d'un élément de verrouillage (8, 9) coudé, le premier élément de guidage (4) comportant au moins une première zone de guidage coudée pour guider l'élément de verrouillage (8) et avec un deuxième élément de guidage (5) disposé au niveau d'une deuxième plaque de meuble (2), avec une deuxième zone de guidage coudée pour guider l'élément de verrouillage (8), **caractérisé en ce que** l'élément de verrouillage (8) est disposé au moins en partie entre la première plaque de meuble (1) et le premier élément de guidage (4), qu'un deuxième élément de verrouillage (9) est disposé au moins en partie entre la deuxième plaque de meuble (2) et le deuxième élément de guidage (5), les deux éléments de verrouillage (8, 9) étant réalisés pour l'essentiel de façon identique et les deux éléments de guidage (4, 5) étant réalisés pour l'essentiel de façon identique, de sorte qu'un dispositif d'assemblage comprenant pour l'essentiel deux plaques de meuble et deux unités de construction soit réalisé, les deux unités de construction étant généralement identiques.

2. Dispositif d'assemblage selon la revendication 1, **caractérisé en ce que** les éléments de guidage (4, 5) et/ou la plaque de meuble (1, 2) comportent respectivement au moins une surface de butée (12) orientée transversalement à la direction de déplacement (15, 16) de l'élément de verrouillage (8, 9) pour la butée de l'élément de verrouillage (8, 9).

3. Dispositif d'assemblage selon l'une quelconque des revendications précédentes, **caractérisé en ce que** les éléments de guidage (4, 5) comportent respectivement au moins deux surfaces de butée (12) pour l'essentiel disposées perpendiculairement l'une par rapport à l'autre.

4. Dispositif d'assemblage selon l'une quelconque des revendications précédentes, **caractérisé en ce que** les éléments de guidage (4, 5) et/ou l'élément de verrouillage (8, 9) comportent respectivement au moins une rainure (10, 13) et/ou un ressort (11, 14) avec la surface de butée (12).

5. Dispositif d'assemblage selon l'une quelconque des revendications précédentes, **caractérisé en ce que** l'élément de verrouillage (8, 9) est guidé de façon à pouvoir pivoter.

6. Dispositif d'assemblage selon l'une quelconque des revendications précédentes, **caractérisé en ce que** l'élément de verrouillage (8, 9) est guidé de façon à pouvoir pivoter largement parallèlement à la plaque de meuble.

7. Dispositif d'assemblage selon l'une quelconque des revendications précédentes, **caractérisé en ce qu'**au moins une région de la section transversale de l'élément de guidage (4, 5) forme une section circulaire.

8. Dispositif d'assemblage selon l'une quelconque des revendications précédentes, **caractérisé en ce que** dans l'état relié des plaques de meuble (1, 2), une fente (6) est réalisée entre les deux éléments de guidage (4, 5) .

9. Dispositif d'assemblage selon l'une quelconque des revendications précédentes, **caractérisé en ce que** dans l'état relié des plaques de meuble (1, 2), les deux éléments de verrouillage (8, 9) forment pour l'essentiel un cercle.

10. Dispositif d'assemblage selon l'une quelconque des revendications précédentes, **caractérisé en ce qu'**au moins une unité d'encliquetage pour encliqueter l'élément de verrouillage (8, 9) est prévue avec l'élément de guidage (4, 5).

11. Dispositif d'assemblage selon l'une quelconque des revendications précédentes, **caractérisé en ce que** l'unité d'encliquetage comprend au moins une position d'encliquetage dans laquelle l'élément de verrouillage (8, 9) comprend une saillie ressortant au-delà de la plaque de meuble (1, 2).

12. Dispositif d'assemblage selon l'une quelconque des revendications précédentes, **caractérisé en ce qu'**au moins une unité de blocage est prévue pour bloquer le déplacement de l'élément de verrouillage (8, 9) par rapport à l'élément de guidage (4, 5).

13. Dispositif d'assemblage selon l'une quelconque des revendications précédentes, **caractérisé en ce qu'**au moins une unité de maintien est prévue pour maintenir ensemble l'élément de verrouillage (8, 9) avec l'élément de guidage (4, 5).

14. Dispositif d'assemblage selon l'une quelconque des revendications précédentes, **caractérisé en ce que** l'unité d'encliquetage sert d'unité de maintien.

15. Meuble avec au moins un dispositif d'assemblage disposé au niveau d'au moins une plaque de meuble (1, 2) pour assembler des plaques de meuble (1, 2), **caractérisé en ce que** le dispositif d'assemblage selon l'une quelconque des revendications précédentes est réalisé.
